# EUROPEAN PATENT SPECIFICATION

(11) **EP 2 275 187 B1**
(45) Date of publication and mention of the grant of the patent: **04.09.2019**
(21) Application number: 10168653.3
(22) Date of filing: 07.07.2010
(51) Int. Cl.: B01D 45/08, B01D 45/14, B01D 46/10, B01D 46/42, B01D 50/00, B01D 46/00, F24F 3/16

(54) **FILTERING ARRANGEMENT**
LUFTFILTERUNGSVORRICHTUNG
DISPOSITIF FILTRANT L'AIR

(30) Priority: 14.07.2009 FI 20095790
(43) Date of publication of application: 19.01.2011
(73) Proprietor: Jeven AB, 82600 Söderhamn (SE)
(72) Inventor: VARTIAINEN, Seppo, 50190 Mikkeli (FI); KORHONEN, Kaarlo, 50100 Mikkeli (FI)
(74) Representative: Berggren Oy, Helsinki & Oulu

(56) References cited:
- WO-A1-2006/051161
- AU-B2- 416 150
- GB-A- 2 248 790
- US-A- 4 006 938
- US-A- 5 888 261
- US-A1- 2007 125 593

## Description

The invention relates to an air filtering arrangement defined in the preamble of claim 1.

The invention also relates to an air filtering arrangement according to claim 9.

Air filtering arrangements comprising rotary filters are disclosed in documents US5888261 and WO2006/051161.

In the prior art, from the Chinese patent application CN-101028575 there is known a centrifugal cleaning apparatus comprising a rotary filter. The filter includes at least one net-like filter disc that is arranged on a motor axis in an air-guiding cylinder. The filter disc is realized of a disc-like support frame and of a radial filtering net that is attached to the support frame.

The problem with the above mentioned centrifugal cleaning apparatus is that the filter disc is a fairly complex structure; it is realized of a support frame and netting, i.e. several different parts that must be fastened together. This kind of filter disc is troublesome to manufacture and therefore expensive. Moreover, problems may arise because of the structure of the filter disc, which has a limited strength and working life. It is pointed out that the filter disc rotates, which means that high centrifugal forces affect particularly the netting, and it may be detached from the support frame.

The object of the invention is to eliminate, among others, the problems connected to the above described air filter. Another object of the invention is to realize a new and improved air filtering arrangement by means of which the air transferred in an air conditioning system can be cleaned of small particles efficiently and with a relatively low energy consumption and pressure difference. The invention is particularly suited to be used as a grease separator in a kitchen ventilation system, whereby particularly grease droplets are cleaned from the exhaust air.

An air filtering arrangement according to the invention is characterized by what is set forth in claim 1. An air filtering arrangement according to the invention is characterized by what is set forth in claim 9. The dependent claims introduce preferred embodiments of the invention.

The invention relates to an air filtering arrangement that is designed for an air conditioning system comprising a disc-like filter element and a power unit, particularly an electric motor, which is connected to the filter element for rotating it, said filter element being provided in connection with an air ventilation duct. According to the invention, the filter element is realized of a perforated plate.

In a most preferred embodiment of the invention, the perforated plate is a straight plate with a uniform thickness, circular in perimeter, and provided with holes.

In a preferred embodiment of the invention, the perforated plate is made of metal, advantageously steel sheet, aluminum sheet or the like.

The advantages of the invention are its simple structure and production-friendly quality. Another advantage of the invention is effective air filtering, for instance grease particle removal from outlet air flow in a kitchen ventilation system. A particular advantage of the invention is that it is easy to clean; the perforated plate can be for instance easily removed from its installed location and washed with water/washing liquid or, as an alternative, the perforated plate can be washed in the location where the air filter is installed.

The invention also relates to an air filtering arrangement comprising an air filter defined in the claims. According to the invention, the perforated plate serving as the filter element is arranged outside the aperture of the ventilation duct, at a distance therefrom.

In a preferred embodiment of the invention, the perforated plate of the air filtering arrangement is arranged to rotate at such a speed of rotation that the tangential air flow in the perforated plate is so high that by means thereof, a bypass flow of the exhaust air through the gap left in between the perforated plate and the outlet aperture is prevented, in which case the exhaust air flow to the outlet aperture and to the exhaust duct is carried out through the holes of the perforated plate.

In a preferred embodiment of the invention, the ratio between the average tangential speed in the perforated plate and particularly in its holes, and the air flow passing through the ventilation duct is advantageously equal to or larger than one.

A particular advantage of the air filtering arrangement according to the invention is that it is a nearly maintenance-free arrangement. In the air filtering arrangement, the perforated plate is placed outside the ventilation duct proper, in which case the air filter and particularly the perforated plate is simple and easy to keep clean. Yet another particular advantage is that a suitable collecting tank can be connected to the air filter for filtered material, in a grease separation application particularly for grease/grease particles that are filtered from kitchen exhaust air.

The invention and its other advantages are described in more detail below, with reference to the appended drawings, where
- Figure 1: illustrates in partial cross-section an air filter according to the invention, as fitted in a ventilation duct;
- Figure 2: illustrates the air filter shown in Figure 1, seen along the section B-B;
- Figure 3: illustrates in partial cross-section another air filter according to the invention, and an air filtering arrangement according to the invention,
- Figures 4a and 4b: show a measuring arrangement for making test measurements and for illustrating the invention;
- Figure 5: illustrates measurement results obtained with the measurement arrangements of Figures 4a and 4b;
- Figure 6: is a front-view illustration of an air filter according to the invention;
- Figure 7: illustrates measurement results of an air filter according to the invention;
- Figure 8: illustrates in partial cross-section a third air filter according to the invention, and an air filtering arrangement according to the invention; and
- Figure 9: illustrates in partial cross-section a fourth air filter according to the invention, and an air filtering arrangement according to the invention.

Some reference numbers for corresponding parts are used in the drawings.

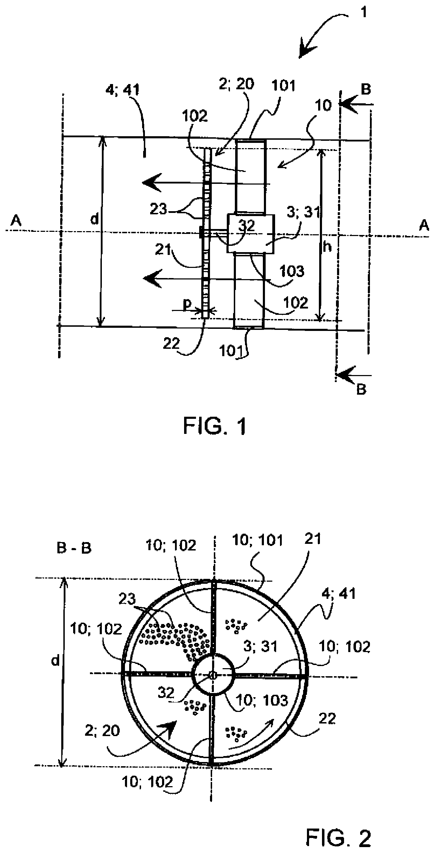

An advantageous air filter not according to the invention for an air conditioning system is illustrated in Figures 1 and 2. The air filter 1 comprises a disc-like filter element 2 and a power unit 3, preferably an electric motor 31 that is connected to the filter element 2 for rotating it. In this air filtering arrangement, the filter element 2 is arranged in connection with a ventilation duct 4; 41, in this case inside the ventilation duct 4; 41. According to the invention, the filter element 2 is realized of a perforated plate 20.

In Figure 1, the rotation axis 32 of the power unit 3, advantageously an electric motor 31, is attached in the middle of the disc-like filter element, i.e. of the disc-like perforated plate 20. The power unit 3, the perforated plate 20 and at the same time the whole air filter 1 are in turn fastened, by means of fastening means 10, to the inner surface of the ventilation duct 4, preferably on the center axis A-A of the ventilation duct.

In a preferred embodiment, the fastening means 10 of the air filter 1 comprise a first fastening sleeve or pipe 101, in the middle of which there is fastened a second fastening sleeve or pipe 103 by means of suitable shafts 102, such as four shafts positioned at 90 degrees from each other, inside which the power unit 3, such as an electric motor 31, is fitted and fastened. In diameter, the first fastening sleeve 101 is such that it fits inside the ventilation duct 4; 41, and it can be supported against the inner wall of the ventilation duct 4; 41, where it can be locked in place (and respectively opened and detached). On a perpendicular plane with respect to the central axis A-A of the ventilation duct 4; 41 and with respect to the direction of the air flow, the shafts 102 are fairly small in area and conform to the flow of the circulation, so that the air resistance caused by the shafts to the air flow in the duct is low. Obviously the fastening means 10 can also be realized in other ways known as such.

In a preferred embodiment of the invention, the perforated plate 20 is a straight plate 21 with a uniform thickness. It is circular in perimeter 22, and provided with holes 23.

In a preferred embodiment of the invention, the perforated plate 20 is made of metal, preferably steel sheet, such as stainless steel sheet. As an alternative, the perforated plate can be for example aluminum sheet. It is pointed out that also other generally used metals and/or metal alloys can be used. It is likewise pointed out that also other solid, preferably flexible, materials can be applied in the perforated plate, for instance plastics such as acryl and polycarbonate.

In a preferred embodiment of the invention, the thickness of the perforated plate 20 is within the range 1-5 mm. It is pointed out that even other thicknesses that fall outside said limit values are possible, depending on the application in question and on the dimensions of the ventilation duct 4, among others.

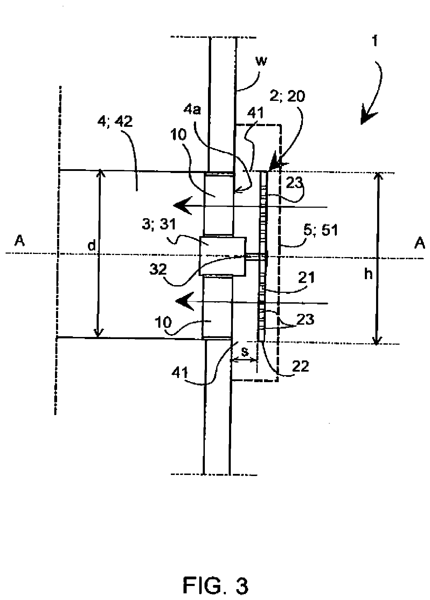

In a preferred embodiment of the invention, the diameter h of the perforated plate 20 is within the range 200-500 mm. In Figures 1 and 2, the diameter of the perforated plate 20 is smaller than the inner diameter d of the ventilation duct 4; 41. In some embodiments, the diameter h of the perforated plate 20 is larger than the inner diameter d of the ventilation duct 4; 42, 43, as is illustrated in the embodiments of Figs 3, 4 and 5, among others.

In a preferred embodiment of the invention, the aperture ratio of the perforated plate 20 is within the range 30-55%. The aperture ratio means the ratio of the total area of the holes 23 to the total area of the whole perforated plate 20. It is pointed out that even other aperture ratios that fall outside said limit values are possible, depending on the application in question and on the dimensions of the ventilation duct 4, among others.

In a preferred embodiment of the invention, the holes 23 of the perforated plate 20 are similar in shape and equal in size. Preferably the holes 23 of the perforated plate 20 are round, i.e. circular in shape. It is an advantage that the round holes 23 are easy to work in the plate 21.

In a preferred embodiment of the invention, the diameters of the holes 23 are equally large and for example within the range 2-5 mm. As an alternative, the diameters of the holes 23 may vary and be for example within said range 2-5 mm. It is pointed out that even other hole diameters that fall outside said limit values are possible, depending on the application in question and on the dimensions of the ventilation duct 4.

In principle, an air filter 1 according to the invention is operated as follows. The perforated plate 20 is rotated rapidly, for example 1000 - 2000 rpm, by a power unit 3; 31, so that air flows through the holes 23 of the perforated plate as the ventilation system is simultaneously in operation. Impurities contained in the air, such as particles and liquid droplets, hit the edges of the rotary perforated plate, start to rotate along with the perforated plate and the tangential air flow created thereby and are conducted - most probably - owing to centrifugal forces radially towards the perimeter 22 of the perforated plate 20, and flow out of the perforated plate. Thereby said impurities do not pass through or by the perforated plate to the ventilation duct 4, but they are deviated out thereof. As an alternative the impurities are - at least partly - collected on the surface of the perforated plate 20, from where they must be removed from time to time.

An air filter according to the invention for an air conditioning system is illustrated in Figure 3. Also in this case, the air filter 1 comprises a disc-like filter element 2 and a power unit 3, preferably an electric motor 31 that is connected at the rotation axis 32 to the filter element 2 for rotating it. According to the invention, the filter element 2 is realized of a perforated plate 20. In this air filtering arrangement, the perforated plate 20 is fitted in connection with the aperture, i.e. outlet aperture 4a of the ventilation duct 4; 42, particularly an exhaust air duct, so that it is located outside the aperture 4a, at a short distance s therefrom, in which case in between the edge 4b of the outlet aperture 4a, and at the same time of the wall w or a corresponding plane, there is an annular gap 41 defined by the distance s. Interior air should be conducted out of the interior through the exhaust air duct 4; 42.

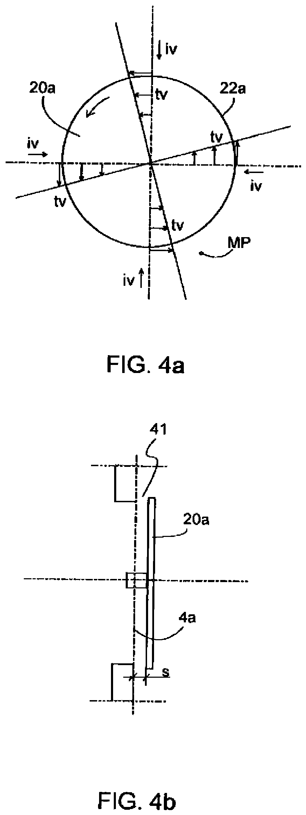

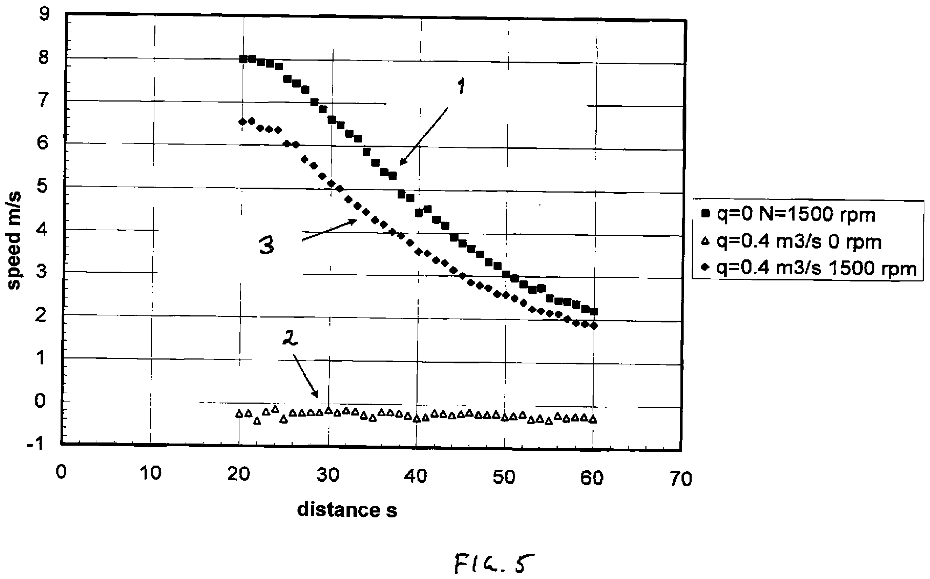

The operation of the air filter 1 in the exhaust air duct is illustrated by means of Figures 4a, 4b and 5. The rotation of the filter element 2, particularly the perforated plate 20, creates an air flow tv that is tangential with respect to said element, grows towards the perimeter 22 of the perforated plate 20 and is largest on the perimeter 22. Most advantageously the tangential air flow tv affects the exhaust air flow so that that exhaust air flow only passes as filtered through the perforated plate 20, and not as a by-pass flow iv through the gap 41.

When the tangential air flow tv caused by the filter element 2, particularly the perforated plate 20, in the area of the gap 41 is larger than the bypass flow iv caused by the suction of the exhaust air in said area, in the rotary separator there is created a condensing flow that prevents the bypass flow of uncleaned air into the exhaust air duct 4; 42.

Measurement results of the tangential air flow tv and of the exhaust air flow iv in the gap area are illustrated in Figure 5, where the x axis has distance s and the flow rate of the exhaust air on the y axis is q, when air is sucked out of the space by an exhaust air device. The measurements are based on an arrangement according to Figures 4a and 4b, where the perforated plate 20 is for the sake of illustration compensated by a solid plate 20a, the diameter whereof is 385 mm. The aperture 4a and the annular gap 41 of the exhaust duct correspond to the air filtering arrangement of Figure 3. The measurement point MP of the air flows is located at a distance k = 45 mm from the perimeter 22a of the plate 20a in the direction of the radius thereof. The group 1 of the measurement points in Figure 5 illustrates a situation where the plate 20a is rotated at the speed N = 1500 rpm, and where the exhaust air flow q = 0 (i.e. the exhaust air device is not in operation). The tangential flow tv is positive (direction away from the center point of the plate and outwards from the exhaust duct) and largest, when the distance s is smallest. As the distance s grows, the effect of the tangential flow tv in the gap 41 is reduced. The group 2 of measurement points in Figure 5 illustrates a situation where the plate 20a does not rotate at all, i.e. N = 0, and where the exhaust air flow q = 0.4 m³/s. The bypass flow iv is in the gap 41 a negative constant (direction towards the outlet aperture 4a of the exhaust air duct 4) irrespective of the distance s. The group 3 of measurement points in Figure 5 illustrates a situation where the rotation of the perforated plate 20 is combined with the operation of the exhaust air device by means of which the exhaust air flow q = 0.4 m³/s is realized. Now the tangential flow tv caused by the rotation of the plate 20a cancels and completely compensates the bypass flow iv of the gap 41.

The above described measurement arrangement and results illustrate the following fact. When the plate 20a of the measurement arrangement is replaced by the perforated plate 20, the whole exhaust air flow preferably passes through the holes 23 of the perforated plate 20a, because the tangential flow tv prevents the bypass flow iv through the gap 41. When the filter element 2, particularly the perforated plate 20, is rotated at a sufficiently high speed of rotation N, and there is created a sufficiently high tangential air flow tv, the whole volume of the exhaust air to be cleaned is conducted through the holes 23 of the rotary perforated plate 20, and the bypass flow iv does not occur, in which case the filtering capacity of the device and the collecting efficiency of the particles remains very high. It is pointed out that without the tangential flow tv, the annular gap 41 between the perimeter 22 of the perforated plate 20 and the outlet aperture 4a should be mechanically sealed. This kind of sealing would wear in use and cause for example noise problems and increased energy consumption.

The magnitude of the tangential air flow tv in the perforated plate 20 depends on the speed of rotation N of the perforated plate, on the aperture ratio of the perforated plate, on the placing of the holes 23 on the plate and on the surface of the perforated plate. The effect of the tangential air flow tv on the exhaust air flow iv in the area of the gap 41 also depends on the distance s of the perforated plate 20 from the outlet aperture 4a and the plane of the wall w. The exhaust air flow created by the exhaust air device in turn depends on the quantity of exhaust air, on the area of the outlet aperture 4a (and of the exhaust duct 4), as well as on the size of the area of the annular gap 41 left between the outlet aperture 4a and the perforated plate 20. Also the ratio of the size, such as the diameter, of the perforated plate 40 to the size, such as diameter, of the outlet aperture 4a, affects the case.

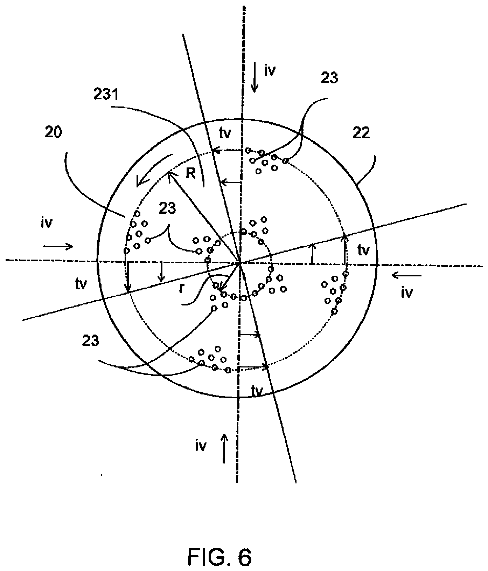

A preferred embodiment of the invention is illustrated in Figure 6. The exhaust air filtering arrangement is viewed from the front, directly towards the perforated plate 20. The holes 23 are arranged in the hole area 231, which is defined in the perimeter area between the first radius R and the second radius r. Now the tangential speed nt of the perforated plate 20 and the holes 23 contained therein is highest, i.e. at maximum nt₁ on the perimeter defined by the radius R, and respectively smallest, i.e. at minimum nt₂ on the perimeter defined by the second radius r. The average tangential speed ntₖ in the hole area 231 is the sum of the maximum and minimum speeds divided by two, i.e. nt₁ + nt₂/2. By means of the average tangential speed ntₖ of the perforated plate 20 and of its holes 23, and by the speed in of the air flow generated by the ventilation device in the ventilation duct 4 and passing through the aperture 4a, such as the speed of the exhaust air flow, the most preferable features of the filtering arrangement can be defined. Now the ratio between the average tangential speed (nkₖ) and the speed in of the air flow passing through the ventilation duct 4, particularly the aperture 4a, is advantageously equal to or larger than 1. In case the average tangential speed ntₖ is increased, and the speed in of the air flow remains constant, the collecting efficiency of the filter and thus that of the perforated plate 20 is increased, i.e. the air flow particles are collected more carefully from the air flow. In case the air flow speed in is reduced, and the average tangential speed ntₖ is maintained constant, the collecting efficiency of the filter is likewise improved. If, on the other hand, the air flow speed in is increased, and the mutual tangential speed ntₖ is maintained, the collecting efficiency is weakened, i.e. the bypass flow iv begins to affect the filtering result. Obviously the tangential speed of the perforated plate 20 also directly affects the tangential air flow tv created by the perforated plate.

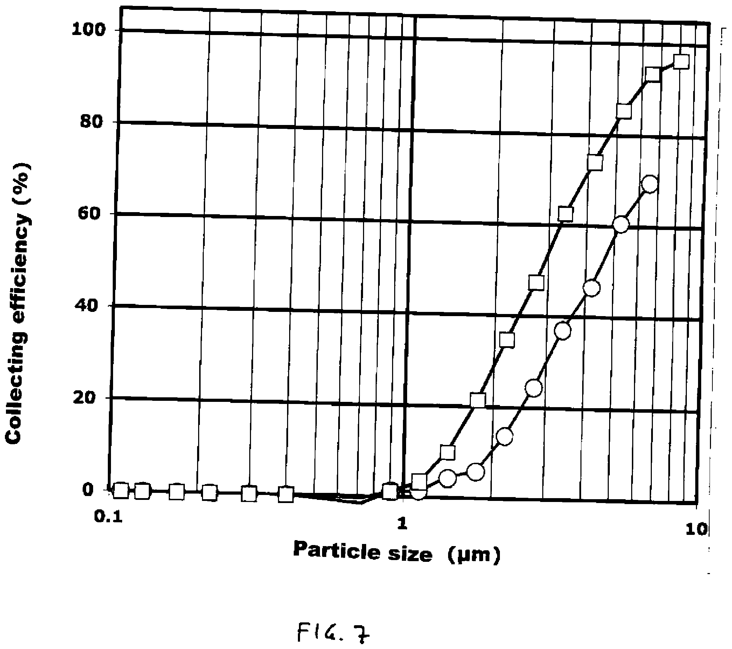

Figure 7 illustrates measurement results 1 and 2 with a filtering arrangement according to the invention, where one and the same perforated plate 20 is used, but where the speed of rotation N of the perforated plate is changed. The diameter of the perforated plate 20 is 400 mm, and the aperture 4a of the ventilation duct is equal in size. The diameter of the holes of the perforated plate 20 is 2 mm, and the aperture ratio of the perforated plate is 40%. The distance s is 20 mm. On the x-axis of the curvature of the Figure there is illustrated the particle size (in micrometers), and on the y-axis the collecting efficiency describing the filtering of particles, given in percentages. The quantity of air passing through the filtering arrangement is 540 I/min. When the speed of rotation of the perforated plate 20 is 1500 rpm, the collecting efficiency in the filtering process is very good, as is seen from the measurement results 1, whereas with the speed of rotation 100 rpm, the collecting efficiency of the filtering is clearly lower, as is seen from the measurement results 2.

In an air filter according to the invention, the ratio of the area of the perforated plate 20 to the area of the outlet aperture 4a or the like is of the order 0.85 - 1.10. Now the diameter h of the perforated plate 20 is advantageously equally long as the diameter d of the ventilation duct, or somewhat longer or shorter than that, for example by 5%. The distance s of the perforated plate 20 from the aperture 4a of the ventilation duct 42 is preferably 5 - 20% of the diameter h of the perforated plate. The air filter 1 and at the same time its power unit 3, such as an electric motor 31, are fitted and fastened by suitable fastening means 10 to the ventilation duct 42. Preferably the fastening means 10; 101, 102, 103 are identical to those described in the embodiments of Figures 1 and 2.

In the embodiment of Figure 3, in connection with the perforated plate 20, at a distance therefrom, there is provided a protective netting 5. In this case the protective netting 5; 51 is arranged around the perforated plate 20. Preferably the protective netting 5; 51 forms a cylinder-shaped protective element that covers the aperture 4a of the ventilation duct 4; 42 and the perforated plate 20, so that the perforated plate can freely rotate inside the protective netting. The protective netting 5; 51 is suitably attached to structures surrounding the aperture 4a, such as the wall.

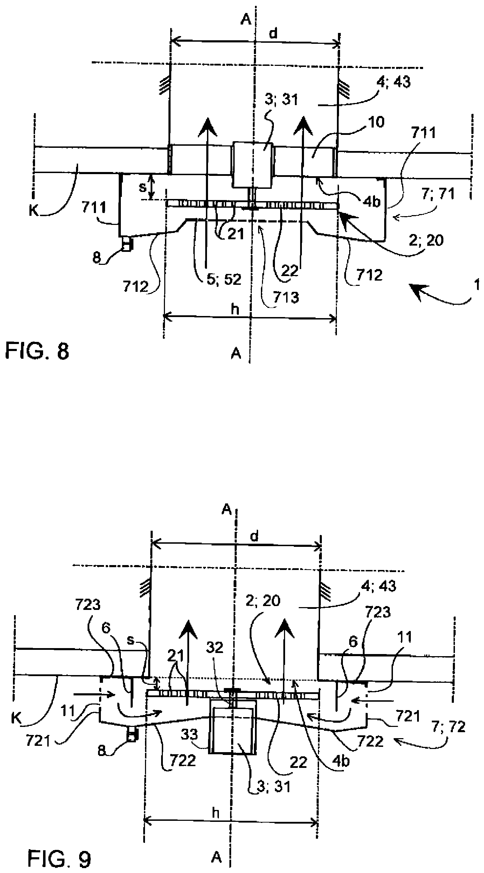

Some air filters 1 according to the invention for an air conditioning system are illustrated in Figures 8 and 9. Also in these cases, the air filter 1 comprises the same elements as the ones described above, for example in connection with Figure 3. In the above described air filtering arrangements, the perforated plate 20 is arranged in connection with the inlet aperture 4b of the ventilation duct 4; 43, particularly of the exhaust air duct, so that it is outside the inlet aperture 4a located at a short distance is therefrom, in principle in the same way as was described in connection with the embodiment of Figure 3. The purpose is to remove interior air from air conditioned interiors through the exhaust air duct 4; 43.

In the embodiment of Figure 8, the air filter 1 and at the same time its power unit 3, such as an electric motor 31, are fitted and fastened by suitable fastening means 10 to the ventilation duct 43. Preferably the fastening means 10; 101, 102, 103 are identical to those described in the embodiments of Figures 1 and 2. The power unit 3, such as an electric motor 31, is arranged inside the ventilation duct 43, particularly the exhaust air duct.

In the embodiment of figure 9, the power unit 3, such as an electric motor 31, is placed on the opposite side of the perforated plate 20, as compared to the embodiment of Figure 4. The power unit 3; 31 is arranged in connection with the inlet aperture 4b of the ventilation duct 43, particularly an exhaust air duct, so that it is located outside the inlet aperture 4b, in which case the perforated plate 20 is placed in between the power unit 3; 31 and the inlet aperture 4b.

In the embodiments of Figures 8 and 9, the air filter 1 is arranged at the inlet aperture 4b of a ventilation duct 4; 43 located in the upper part, such as a ceiling K, of an air conditioned interior space, said ventilation duct 4; 43 being particularly an exhaust air duct. Said inlet aperture 4b is placed horizontally or, as an alternative, at an inclined angle with respect to the horizontal plane. In that case the air filter 1, particularly the perforated plate 20, is located below the inlet aperture 4b. In this air filtering arrangement, the air filter 1 also comprises a collection tank 7; 71, 72 for collecting particles, such as liquid droplets, particularly grease droplets and/or other material filtered from the air.

The collection tank 7; 71, 72 comprises an annular edge element 711, 721 and a bottom part 712, 722, which is arranged to function as the collection tank proper. The bottom part 712, 722 is arranged as a low cone that is inclined downwardly towards the edge element 711, 721. An exhaust valve 8 is advantageously provided in the bottom part 712, 722 of the collection tank 7; 71, 72, preferably at the lowest point thereof. The collection tank 7; 71, 72 is attached at the edge element 711, 721 to the ceiling K or the like, so that the ventilation duct 4; 43 and the perforated plate 20 are located essentially in the middle thereof, and the bottom element 712, 722 below them.

In the embodiment of Figure 8, the bottom part 712 of the collection tank 7; 71 is at least partly open in the middle, meaning it is provided with at least one aperture 713. Said aperture is preferably provided with a protective netting 5; 52. Through said aperture 713, air is fed in the air filter 1 and further, as cleaned, through the outlet aperture 4b to the ventilation duct 4; 43.

In the embodiment of Figure 5, inside the collection tank 7; 72 and around the perforated plate 20, on the same level, there is arranged an annular collection surface 6, which is placed at right angles to the plane of the perforated plate. The collection surface 6 is a relatively short, straight tubular element. The collection tank 7; 72 is arranged below the perforated plate 20 and the collection surface 6. In the embodiment of Figure 8, the edge element 711 is arranged to serve as the collection surface, in similar fashion as the separate collection surface 6 of Figure 5.

At one edge 61, the collection surface 6 is attached to the ceiling K or the like, or, as an alternative, to the collection tank 7; 72, for instance in connection with the edge element 721 thereof, by a suitable flange 723 or the like. The other edge 62 of the collection surface 6 is free, and it extends to the interior of the collection tank 7; 72, at a distance from the bottom element 722. The perforated plate 20 collects material to be filtered from the air flow, centrifugal forces separate loose filtered material from the perforated plate 20, and the material collides in the collection surface 6 and flows and/or falls from the collection surface 6 down to the collection tank 7; 72, particularly to the bottom part 722 thereof.

It is advantageous to coat the rotary perforated plate 20 so that it becomes a particle-repellent surface, in which case the particles that are separated by the rotary motion are, owing to the effects of the centrifugal force and the tangential air flow, transferred to the collection surface 6 of the collection tank 7; 72, from where they flow down to the bottom element 722.

In the embodiment of Figure 9, the power unit 3; 31 is fitted and fastened, in a suitable housing 33, in the center area of the collection tank 7; 72, particularly in the middle of the bottom element 722. In connection with the edge element 721 of the collection tank 7; 72, there is provided one uniform air aperture, or, as an alternative, a number of air apertures 11, through which air is arranged to flow to the air filter 1 and further to the exhaust duct 4; 43. Advantageously the air aperture/apertures 11 are arranged on the same plane as the collection surface 6 and the perforated plate 20. Now the incoming air to be cleaned, entering the air filter through the air apertures 11, flows around the other edge 62 of the collection surface 6 and through the bottom element 722 of the collection tank 7; 72 to the area of the rotary perforated plate 20 and through the holes 21 thereof as filtered and cleaned, and proceeds further to the exhaust air duct 4; 43.

In the embodiment of Figure 9, the collection tank 7; 72 advantageously also serves as fastening means, by which the air filter 1 is attached to the ventilation duct 4; 43, particularly in connection with the outlet aperture 4b.

The collection tank 7; 71, 72, and the collection surface 6, are realized of a suitable metal sheet, such as steel sheet, or alternatively of plastic sheet.

The invention is not restricted to the above described preferred embodiment only, but many modifications are possible within the scope of the inventive idea defined in the appended claims.

## Claims

1. An air filtering arrangement comprising
an air filter (1) for an air conditioning system, comprising
a disc-like filter element (2) and
a power unit (3), preferably an electric motor, that is connected to the filter element for rotating it,
wherein said filter element being arranged in connection with a ventilation duct (4; 41, 42, 43) and
wherein the filter element (2) is realized of a perforated plate (20),
**characterized in that**
the perforated plate (20) serving as the filter element (2) is arranged outside the aperture (4a, 4b) of the ventilation duct (4; 41, 42), at a distance (s) therefrom.

2. An air filtering arrangement according to claim 1, wherein the perforated plate (20) is a straight plate (21) with a uniform thickness, circular in perimeter (22), and provided with holes (23).

3. An air filtering arrangement according to claim 1 or 2, wherein the perforated plate (20) is made of metal, preferably steel sheet.

4. An air filtering arrangement according to any of the preceding claims, wherein the aperture ratio on the perforated plate (20) is within the range 30-55%.

5. An air filtering arrangement according to any of the preceding claims, wherein the diameter of the holes (23) is within the range 2-5 mm.

6. An air filtering arrangement according to any of the preceding claims, wherein the protective netting (5; 51) is arranged in connection with the perforated plate (20), at a distance therefrom.

7. An air filtering arrangement according to any of the preceding claims, wherein the air filter (1) is arranged in an substantially vertical position, or alternatively at an inclined angle, and that underneath the perforated plate (20), there is provided a collecting tank (7; 71, 72) for collecting particles, such as grease droplets and/or other filtered material.

8. An air filtering arrangement according to claim 7, wherein outside the perimeter (22) of the perforated plate (20), on the same level with the perforated plate, there is arranged an annular vertical collecting surface (6), against which the centrifugal forces separate loose filtered material from the perforated plate, the collecting tank (7) being arranged underneath said perforated plate (20) and collecting surface (6).

9. An air filtering arrangement according to claim 1, wherein the distance (s) of the perforated plate (20) from the ventilation duct aperture (4a, 4b) is 10-20% of the diameter (h) of the perforated plate.

10. An air filtering arrangement according to claim 9, particularly an exhaust air filtering arrangement, wherein the air filter (1) is arranged in an inlet aperture (4b) of the exhaust air duct (42,43) located in the upper part of an interior space, such as in an inner ceiling (K), and that underneath the perforated plate (20), there is provided a collecting tank (7) for collecting particles, such as grease droplets and/or other filtered material.

## Patentansprüche

1. Luftfilteranordnung umfassend
einen Luftfilter (1) für ein Klimatisierungssystem, umfassend
ein scheibenförmiges Filterelement (2) und
eine Leistungseinheit (3), vorzugsweise einen Elektromotor, die mit dem Filterelement zum Drehen desselben verbunden ist,
wobei das Filterelement in Verbindung mit einem Lüftungskanal (4; 41, 42, 43) angeordnet ist; und
wobei das Filterelement (2) aus einer perforierten Platte (20) besteht,
**dadurch gekennzeichnet, dass**
die als Filterelement (2) dienende perforierte Platte (20) außerhalb der Öffnung (4a, 4b) des Lüftungskanals (4; 41, 42) in einem Abstand (s) davon angeordnet ist.

2. Luftfilteranordnung nach Anspruch 1, wobei die perforierte Platte (20) eine gerade Platte (21) mit einer gleichmäßigen Dicke ist, kreisförmig im Umfang (22) und mit Löchern (23) versehen.

3. Luftfilteranordnung nach Anspruch 1 oder 2, wobei die perforierte Platte (20) aus Metall, vorzugsweise Stahlblech, hergestellt ist.

4. Luftfilteranordnung nach einem der vorhergehenden Ansprüche, wobei das Öffnungsverhältnis auf der perforierten Platte (20) im Bereich von 30-55% liegt.

5. Luftfilteranordnung nach einem der vorhergehenden Ansprüche, wobei der Durchmesser der Löcher (23) im Bereich von 2-5 mm liegt.

6. Luftfilteranordnung nach einem der vorhergehenden Ansprüche, wobei das Schutznetz (5; 51) in Verbindung mit der perforierten Platte (20) in einem Abstand davon angeordnet ist.

7. Luftfilteranordnung nach einem der vorhergehenden Ansprüche, wobei der Luftfilter (1) in einer im Wesentlichen vertikalen Position oder alternativ in einem geneigten Winkel angeordnet ist und dass unterhalb der perforierten Platte (20) ein Sammelbehälter (7; 71, 72) zum Sammeln von Partikeln, wie beispielsweise Fetttropfen und/oder anderem Filtermaterial, vorgesehen ist.

8. Luftfilteranordnung nach Anspruch 7, wobei außerhalb des Umfangs (22) der perforierten Platte (20), auf gleicher Höhe mit der perforierten Platte, eine ringförmige vertikale Sammelfläche (6) angeordnet ist, gegen die die Zentrifugalkräfte loses Filtermaterial von der perforierten Platte trennen, wobei der Sammelbehälter (7) unterhalb der perforierten Platte (20) und der Sammelfläche (6) angeordnet ist.

9. Luftfilteranordnung nach Anspruch 1, wobei der Abstand (s) der perforierten Platte (20) von der Lüftungskanalöffnung (4a, 4b) 10-20% des Durchmessers (h) der perforierten Platte beträgt.

10. Luftfilteranordnung nach Anspruch 9, insbesondere eine Abluftfilteranordnung, wobei der Luftfilter (1) in einer Einlassöffnung (4b) des Abluftkanals (42, 43) angeordnet ist, die sich im oberen Teil eines Innenraumes, wie beispielsweise in einer Innendecke (K), befindet, und dass unterhalb der perforierten Platte (20) ein Sammelbehälter (7) zum Sammeln von Partikeln, wie beispielsweise Fetttropfen und/oder anderem Filtermaterial, vorgesehen ist.

## Revendications

1. Agencement de filtration d'air comprenant un filtre à air (1) pour un système de conditionnement d'air, comprenant
un élément de filtre discoïde (2) et
une unité d'entraînement (3), de préférence un moteur électrique, qui est connecté à l'élément de filtre pour le faire tourner,
dans lequel ledit élément de filtre est agencé en connexion avec un conduit de ventilation (4 ; 41, 42, 43) et
dans lequel l'élément de filtre (2) est réalisé à partir d'une plaque perforée (20),
**caractérisé en ce que**
la plaque perforée (20) qui sert d'élément de filtre (2) est agencée à l'extérieur de l'ouverture (4a, 4b) du conduit de ventilation (4 ; 41, 42), à une certaine distance (s) de celle-ci.

2. Agencement de filtration d'air selon la revendication 1, dans lequel la plaque perforée (20) est une plaque rectiligne (21) ayant une épaisseur uniforme, un périmètre circulaire (22), et pourvue de trous (23).

3. Agencement de filtration d'air selon la revendication 1 ou 2, dans lequel la plaque perforée (20) est constituée de métal, et de préférence de tôle d'acier.

4. Agencement de filtration d'air selon l'une quelconque des revendications précédentes, dans lequel le ratio d'ouverture de la plaque perforée (20) est compris dans une plage de 30 % à 55 %.

5. Agencement de filtration d'air selon l'une quelconque des revendications précédentes, dans lequel le diamètre des trous (23) est compris dans une plage de 2 à 5 mm.

6. Agencement de filtration d'air selon l'une quelconque des revendications précédentes, dans lequel le treillis de protection (5 ; 51) est agencé en connexion avec la plaque perforée (20), à une certaine distance de celle-ci.

7. Agencement de filtration d'air selon l'une quelconque des revendications précédentes, dans lequel le filtre à air (1) est agencé dans une position substantiellement verticale, ou en variante selon un angle incliné, et dans lequel un réservoir de collecte (7 ; 71, 72) est pourvu sous la plaque perforée (20) pour collecter des particules, telles que des gouttelettes de graisse et/ou un autre matériau filtré.

8. Agencement de filtration d'air selon la revendication 7, dans lequel, à l'extérieur du périmètre (22) de la plaque perforée (20), sur le même niveau que la plaque perforée, est agencée une surface de collecte verticale annulaire (6), contre laquelle les forces centrifuges séparent le matériau filtré libre de la plaque perforée, le réservoir de collecte (7) étant agencé sous ladite plaque perforée (20) et la surface de collecte (6).

9. Agencement de filtration d'air selon la revendication 1, dans lequel la distance (s) entre la plaque perforée (20) et l'ouverture (4a, 4b) du conduit de ventilation est comprise entre 10 % et 20 % du diamètre (h) de la plaque perforée.

10. Agencement de filtration d'air selon la revendication 9, et en particulier agencement de filtration d'air d'échappement, dans lequel le filtre à air (1) est agencé dans une ouverture d'entrée (4b) du conduit d'air d'échappement (42, 43) situé dans la partie supérieure d'un espace intérieur, tel qu'un plafond intérieur (K), et dans lequel un réservoir de collecte (7) est pourvu sous la plaque perforée (20) pour collecter des particules, telles que des gouttelettes de graisse et/ou un autre matériau filtré.
